# EUROPEAN PATENT SPECIFICATION

(11) **EP 1 703 413 B1**
(45) Date of publication and mention of the grant of the patent: **23.03.2011**
(21) Application number: 05256657.7
(22) Date of filing: 27.10.2005
(51) Int. Cl.: G06F 15/177, G06F 3/06, G06F 13/40

(54) **Partition allocation method and computer system**
Partitionszuweisungsverfahren und Computersystem
Procédé d'attribution de partition et système informatique

(30) Priority: 18.03.2005 JP 2005080667
(43) Date of publication of application: 20.09.2006
(73) Proprietor: FUJITSU LIMITED, Kawasaki-shi, Kanagawa 211-8588 (JP)
(72) Inventor: Takahashi, Jin,, Kawasaki-shi, Kanagawa 211-8588 (JP); Nakayama, Hiroshi, Kawasaki-shi, Kanagawa 211-8588 (JP); Kagohashi, Satoru, Yokohama-shi Kanagawa 222-0033 (JP)
(74) Representative: Hitching, Peter Matthew

(56) References cited:
- EP-A- 0 848 327
- EP-A- 0 962 864
- US-A- 6 148 356
- US-A1- 2004 181 647
- US-A1- 2005 027 900
- HEWLETT PACKARD COMPANY: "hp server 8400 - a technical whitepaper" INET, [Online] August 2002 (2002-08), XP002382254 Retrieved from the Internet: URL:http://www.hp.ru/data/offline/products /0790/rp8400_tech_wp.pdf> [retrieved on 2006-05-23]

## Description

### CROSS-REFERENCE TO RELATED APPLICATIONS

This application claims the benefit of Japanese Publication No. 2006260488, filed March 18, 2005, in the Japan Patent Office.

### BACKGROUND OF THE INVENTION

### 1. Field of the Invention

The present invention generally relates to partition allocation methods and computer systems, and more particularly to a partition allocation method for allocating a plurality of partitions with respect to input and output (I/O) controllers and input and output (I/O) ports of a computer system, and to a computer system that employs such a partition allocation method.

### 2. Description of the Related Art

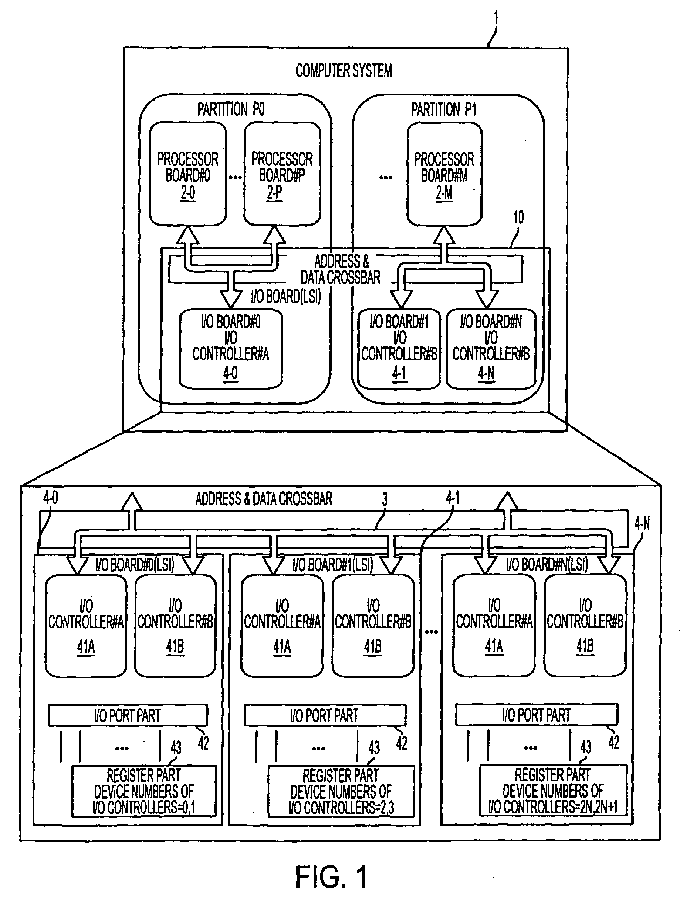

FIG 1 is a block diagram showing an important part of a general computer system. As indicated in the top portion of FIG 1, a computer system 1 includes a plurality of processor boards (processor systems) 2-0 through 2-M, an address and data crossbar 3, and a plurality of I/O boards (LSis) 4-0 through 4-N, where M and N are arbitrary integers greater than or equal to 2. Each of the processor boards 2-0 through 2-M includes a plurality of CPUs, memories and the like. For example, the processor boards 2-0 through 2-P and the I/O board 4-0 form a partition P0, and the processor board 2-P+1 through 2-M and the I/O boards 4-1 through 4-N form a partition P1. The address and data crossbar 3 may be formed by an address crossbar and a data crossbar which are separate.

The lower portion of FIG 1 shows a portion 10 including the address and data crossbar 3 and the I/O boards 4-0 through 4-N in more detail. Each of the I/O boards 4-0 through 4-N includes a plurality of I/O controllers, for example, I/O controllers 41 A and 41 B, an I/O port part 42, and a register part 43. The register part 43 includes a device number register that stores device numbers of the I/O controllers 41A and 41 B within the I/O board to which this register part 43 belongs, and an address range register that stores an address range of the I/O port part 42 within the I/O board to which this register part 43 belongs. For example, the device numbers of the I/O controllers 41 A and 41 B within the I/O board 4-0 respectively are #0 and #1, the device numbers of the I/O controllers 41 A and 41 B within the I/O board 4-0 respectively are #0 and #1, the device numbers of the I/O controllers 41 A and 41 B within the I/O board 4-1 respectively are #2 and #3, and the device numbers of the I/O controllers 41 A and 41 B within the I/O board 4-N respectively are #2N and #2N+1.

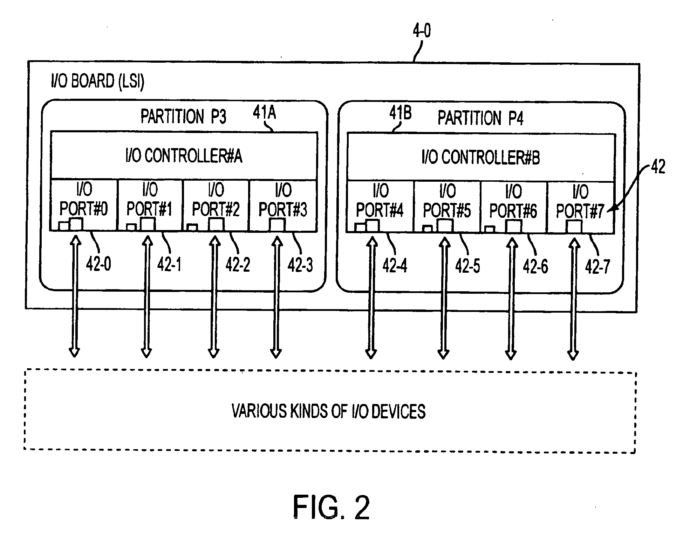

FIG 2 is a diagram showing the I/O port part of the I/O board. Since the structures of each of the I/O boards 4-0 through 4-N are the same, FIG. 2 shows the structure of the I/O board 4-0 as an example. The I/O port part 42 of the I/O board 4-0 has 8 I/O ports 42-0 through 42-7, for example. Conventionally, whether the I/O ports 42-0 through 42-7 belong to the I/O controller 41A or 41 B is fixedly determined (for example, hard wired). In the example shown in FIG. 2, the I/O ports 42-0 through 42-3 belong to the I/O controller 41A, and the I/O ports 42-4 through 42-7 belong to the I/O controller 41 B. Each of the I/O ports 42-0 through 42-7 are connectable to various kinds of resources, such as (without limitation) I/O devices, such as magnetic disk drives. Because a partition may be determined in units of a processor board 2-0 and in units of I/O controllers 41 within an I/O board 4-0, it is possible to include the I/O controller 41 A in a partition P3 and to include the I/O controller 41 B in a partition P4, for example. But since the I/O controllers 41A and 41 B to which the I/O ports 42-0 through 42-7 belong are fixedly determined in advance, the I/O ports 42-0 through 42-3 are fixedly included in the partition P3 and the I/O ports 42-4 through 42-7 are fixedly included in the partition P4 in this particular case.

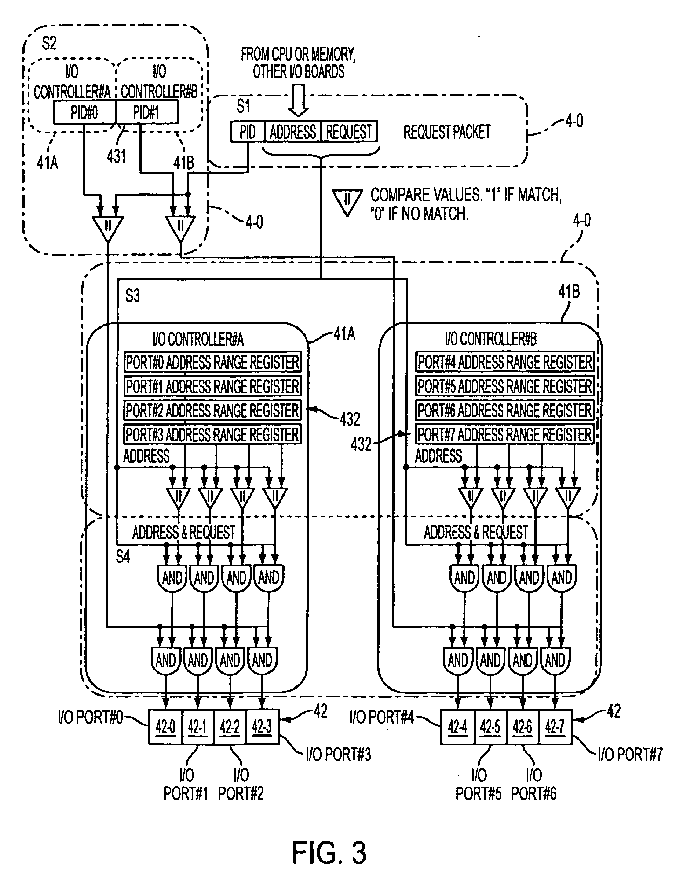

FIG 3 is a diagram for explaining an access from the processor board towards the I/O device. In FIG. 3, a circuit indicated by a triangular symbol denotes a comparator that outputs "1" when 2 inputs thereof match and outputs "0" when 2 inputs thereof do not match. A circuit indicated by "AND" denotes an AND gate. In addition, portions of the I/O board 4-0 related to steps S1 through S4 are surrounded by one-dot chain lines.

For example, in FIG. 3; in case of an access from the processor board 2-0 towards an I/O device, a request packet is sent to the I/O board 4-0 from the processor board 2-0 (step S1). The request packet is made up of a partition identifier (ID) (PID), which comprises a device number of an I/O controller 41; an address (Address), such as a physical address of a request target, an address space (or address range) and an I/O address; and a request content (Request) including commands and data. In the I/O board 4-0, the PID of the request packet is compared with the device numbers #0 and #1 of the I/O controllers 41A and 41 B within the I/O board 4-0 that are stored in a device number register 431 of the register part 43 within the I/O board 4-0 (step S2). At the same time, the address of the request packet is compared with the address ranges of each of the I/O ports 42-0 through 42-7 that are stored in an address range register 432 of the register part 43 (step S3). The request packet reaches only the I/O port 42 that belongs to the I/O controller 41 A or 41 B having the matching device number as a result of the comparison made in the step S2 and that also has the matching address as a result of the comparison made in the step S3 (step S4), and access is made to the desired I/O device via this I/O port 42.

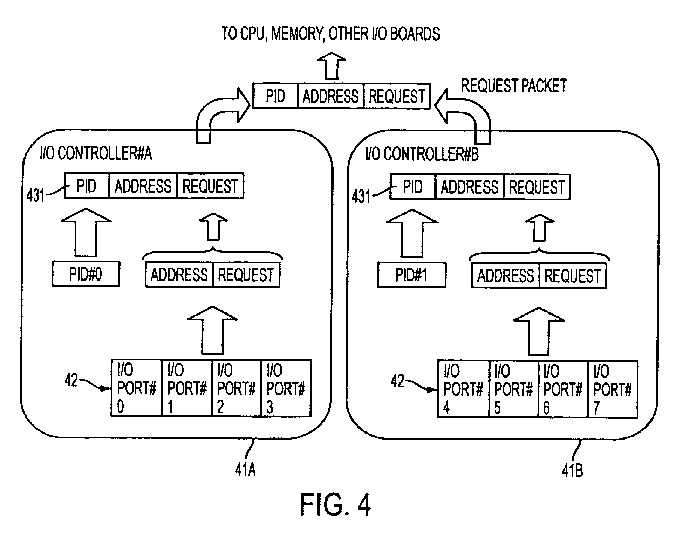

FIG. 4 is a diagram for explaining an access from the I/O device towards the processor board 2-0. For example, in the case of access from the I/O board 4-0 towards the processor board 2-0, the I/O port 42 sends to the processor board 2-0 via the address and data crossbar 3 a request packet having a PID written with the device number of an I/O controller 41A or 41 B to which this I/O port 42 belongs, based on the request received from the I/O device and including the address (Address) and the request content (Request). For example, if one of the I/O ports 42-0 through 42-3 of the I/O board 4-0 receives the request from the I/O device, the request packet having the PID written with the device number #0 of the I/O controller 41A of the I/O board 4-0 is sent to the processor board 2-0. In addition, if one of the I/O ports 42-4 through 42-7 of the I/O board 4-0 receives the request from the I/O device, the request packet having the PID written with the device number #1 of the I/O controller 41 B of the I/O board 4-0 is sent to the processor board 2-0.

Japanese Laid-Open Patent Publication No. 09-231187 discusses a method of dividing a crossbar switch into partitions. In addition, Japanese Laid-Open Patent Publication No. 2001-236305 discusses a bus connecting controller that can vary the corresponding relationship of the connection to an external bus depending on data exchanged via the external bus.

In the conventional computer system, the I/O controllers 41A and 41 B to which the I/O ports 42-0 through 42-7 belong are fixedly determined in advance for each of the I/O boards 4-0 through 4-N. For this reason, although a partition may be determined in units of I/O controllers 41A and 41 B, each of the I/O ports 42-0 through 42-3 allocated with respect to the I/O controller 41 A cannot be freely allocated to another partition to which the I/O controller 41 B belongs, even if usable, because the I/O ports 42-0 through 42-7 of each of the I/O boards 4-0 through 4-N are fixedly allocated with respect to the I/O controllers 41A and 41 B. Consequently, for example, there have been problems in that the degree of freedom of partition allocation is poor, and/or it has been difficult to improve the utilization efficiency of the resources.

"Hp server 8400 - a technical whitepaper" INET, [Online] August 2002, Hewlett Packard Company, XP002382254 discloses a server in which partitions allow a single system to be logically divided into two independent systems within the same server. The hp rp8400 server can be divided into two independent hardware partitions. In a partitioned configuration, system resources such as I/O slots, core I/O, disks and removable-media devices are evenly split between the two partitions. There is no flexibility to otherwise divide these components. For example, it is not possible to include 12 I/O slots in partition 0 and four slots in partition 1; the split must be even.

US 2005/0027900 discloses an apparatus and method for allowing one or more processing complexes to share a disk controller, particularly a serial ATA (SATA) controller. Each processing complex utilizes its own load-store domain to couple to the shared SATA controller, either directly, or indirectly through a shared I/O switch. Ultimately, requests from the processing complexes are presented to the switch with operating system domain header (OSD header) information so that the shared SATA controller can determine which request came from which processing complex, and allocate resources accordingly. Upstream responses from the shared SATA controller include the OSD header so that the shared I/O switch can accurately route the responses to their respective processing complexes. The shared SATA controller includes OSD ID logic to determine the source/result of packets, one or more task files to support multiple processing complexes, and one or more DMA engines to improve performance for requests from multiple processing complexes.

### SUMMARY OF THE INVENTION

Accordingly, as non-limiting examples, the present invention provides partition allocation methods and computer systems that can improve a degree of freedom of partition allocation and/or a utilization efficiency of resources. The invention is defined in the appended claims.

Additional aspects and advantages of the invention will be set forth in part in the description which follows and, in part, will be obvious from the description, or may be learned by practice of the invention.

In one aspect of the present invention, a partition allocation method is provided for a computer system in which a plurality of processor boards and a plurality of input and output (I/O) boards are coupled via an address and data crossbar, to allocate partitions in units of the processor boards and in units of I/O controllers within the I/O boards, the method characterized by providing in a software settable I/O port assignment register part within a corresponding one of the I/O boards having a device number register, an address range register and an I/O port assignment information register, and enabling upon receipt of a data packet from a processor board, a comparison of a partition ID of the data packet with stored device numbers of the I/O controllers that are stored in said device number register and at the same time, allowing a comparison of an address of the data packet with stored address ranges of each of the I/O ports that are stored in said address range register, wherein the data packet reaches an I/O port, only if the I/O controller, to which the I/O port belongs as indicated in the I/O port assignment information stored in said I/O port assignment information register, has the matching device number and the matching address according to the partition ID comparison and the address comparison; thereby allowing partitions to be indicated in units of the processor boards and in units of I/O controllers within the I/O boards, to which the plurality of I/O ports within said each of the I/O boards belong, wherein each of the partitions is made up of an arbitrary number of processor boards and an arbitrary number of I/O controllers.

A computer system is also provided in another aspect of the present invention, having a plurality of processor boards each including a plurality of processors; a plurality of input and output (I/O) boards each including a plurality of I/O controllers and a plurality of I/O ports; and an address and data crossbar coupling the plurality of processor boards and the plurality of I/O boards, characterized by each of the I/O boards including a software settable register part comprising: a device number register; an address range register; and an I/O port assignment information register, wherein said corresponding one of the I/O boards is arranged, upon receipt of a request packet instructing an access from an arbitrary one of the processor boards towards a desired I/O device that is coupled to said corresponding one of the I/O boards, to compare a partition ID of the request packet with device numbers of the I/O controllers that are stored in said device number register and at the same time, is arranged to compare an address of the request packet with address ranges of each of the I/O ports that are stored in said address range register, wherein the request packet reaches an I/O port, only if the I/O controller, to which the I/O port belongs as indicated in the I/O port assignment information stored in said I/O port assignment information register, has the matching device number and the matching address as a result of the comparisons made; thereby allowing partitions to be indicated in units of the processor boards and in units of I/O controllers within the I/O boards, to which the plurality of I/O ports within said each of the I/O boards belong, wherein each of the partitions is made up of an arbitrary number of processor boards and an arbitrary number of I/O controllers.

In another aspect of the present invention, there is provided an input and output apparatus (I/O) for a computer system having a plurality of processor boards and an address and data crossbar for coupling the I/O apparatus to the processor boards, comprising a plurality of I/O controllers and a plurality of I/O ports in communication with the I/O controllers; characterized by a software settable partition allocator comprising: a device number register; an address range register and an I/O port assignment information register; a first circuit, upon receipt of a data packet from a processor board, arranged to compare a partition ID of the data packet with device numbers of the I/O controllers that are stored in said device number register; and a second circuit arranged to compare, at the same time as the first circuit, an address of the data packet with address ranges of each of the I/O ports that are stored in said address range register, wherein the data packet reaches an I/O port, only if the I/O controller, to which the I/O port belongs as indicated in the I/O port assignment information stored in said I/O port assignment information register, has the matching device number and the matching address according to the partition ID comparing of the first circuit and the address comparing of the second circuit; thereby allowing partitions to be indicated in units of the processor boards and in units of I/O controllers within the I/O boards, to which the plurality of I/O ports within said each of the I/O boards belong, wherein each of the partitions is made up of an arbitrary number of processor boards and an arbitrary number of I/O controllers.

According to an embodiment of the present invention, an identifier (ID) of a partition assignment within the I/O board in which each of the I/O ports exists is set in the register part as said information indicating the partitions to which the plurality of I/O ports within each of the I/O boards belong.

According to an embodiment of the present invention, information indicating the I/O controllers within the I/O board to which each of the I/O ports is assigned is set in the register part as said information indicating the partitions to which the plurality of I/O ports within each of the I/O boards belong.

According to an embodiment of the present invention, the software is executed by an arbitrary one of a plurality of processors within an arbitrary one of the processor boards.

According to an embodiment of the present invention, said register part includes a device number register to store a device number of each of the I/O controllers within said corresponding one of the I/O boards, an address range register to store an address range of each of the I/O ports within said corresponding one of the I/O boards, and an assignment information register to store said information indicating the assigned I/O controllers for each of the I/O ports within said corresponding one of the I/O boards.

According to an embodiment of the present invention, said corresponding one of the I/O boards, upon receipt of a request packet instructing an access from an arbitrary one of the processor boards towards a desired I/O device that is coupled to said corresponding one of the I/O boards, compares a partition ID of the request packet with device numbers of the I/O controllers that are stored in the device number register, based on the I/O port to I/O controller assignment information that is set in the assignment information register, and at same time, compares an address of the request packet with address ranges of each of the I/O ports that are stored in the address range register, so that the request packet reaches only an I/O port that belongs to the I/O controller having the matching device number and the matching address as a result of the comparisons made, to make the access to the desired I/O device via this I/O port.

According to an embodiment of the present invention, said corresponding one of the I/O boards, upon receipt via one I/O port of a request instructing an access from an I/O device that is coupled to said corresponding one of the I/O boards towards a desired processor board, sends to the desired processor board via the address and data crossbar a request packet having a partition ID written with the device number of the I/O controller to which said one I/O port belongs.

According to an embodiment of the present invention, said corresponding one of the I/O boards, upon receipt of said request, generates the request packet having the partition ID written with the device number of the I/O controller to which said one I/O port belongs, based on the I/O port to I/O controller assignment information set in said assignment information register.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a block diagram showing an important part of a general computer system.
FIG. 2 is a diagram showing the I/O port part of the I/O board.
FIG. 3 is a diagram for explaining an access from the processor board towards the I/O device.
FIG 4 is a diagram for explaining an access from the I/O device towards the processor board.
FIG. 5 is a diagram showing an I/O port part of an I/O board of an embodiment of a computer system, according to an embodiment of the present invention.
FIG 6 is a diagram for explaining an access from the processor board towards the I/O device, according to an embodiment of the present invention.
FIG. 7 is a diagram for explaining an access from the I/O device towards the processor board, according to an embodiment of the present invention.
FIG. 8 is a diagram showing assignments of PCI function numbers F#0 through F#7 in one arbitrary PCI bus configuration space to the I/O ports of I/O controllers, according to an embodiment of the present invention.
FIG. 9 is a diagram showing assignments of the I/O ports belonging to the 2 I/O controllers within each of the I/O boards to PCI functions, according to an embodiment of the present invention, according to an embodiment of the present invention.
FIG 10 is a diagram showing the assignments of the function numbers to the I/O ports of the I/O controllers for a case where specific I/O ports of the I/O board belong to one I/O controller and the other I/O ports of the same I/O board belong to the other I/O controller, according to an embodiment of the present invention.

### DETAILED DESCRIPTION OF THE PREFERRED EMBODIMENTS

Reference will now be made in detail to the present embodiments of the present invention, examples of which are illustrated in the accompanying drawings, wherein like reference numerals refer to the like elements throughout. The embodiments are described below to explain the present invention by referring to the figures.

According to the present invention, for example (without limitation), it is possible to realize partition allocation methods and computer systems that can improve a degree of freedom of partition allocation and/or utilization efficiency of resources. In a computer system in which a plurality of processor boards and a plurality of input and output (I/O) boards are coupled via an address and data crossbar, a partition allocation method allocates partitions in units of the processor boards and the I/O controllers within the I/O boards, by setting via software information indicating partitions to which the plurality of I/O ports within each of the I/O boards belong, in a register part within a corresponding one of the I/O boards. According to an aspect of the present invention, the partition allocation is real-time and/or dynamic.

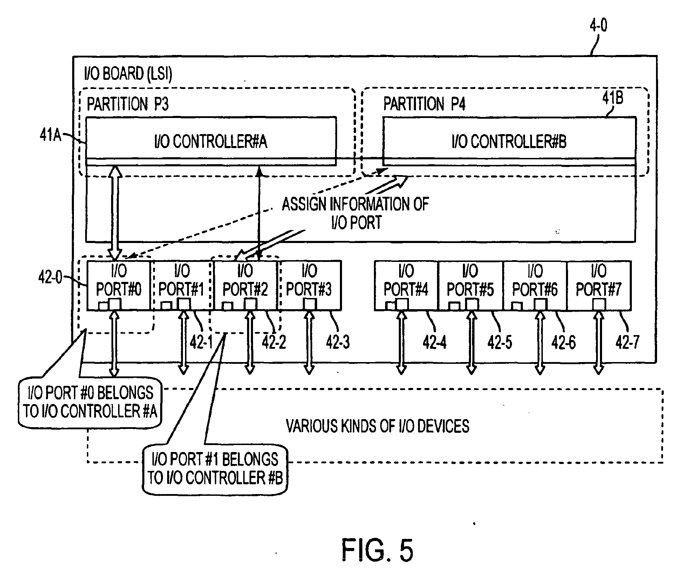

A description will be given of embodiments of the partition allocation method and the computer system according to the present invention, by referring to FIG. 5 and the subsequent drawings.

A computer system embodying the present invention could have a basic structure same as the basic structure of the example shown in FIG. 1, and a description and illustration thereof will be omitted. An embodiment of the present invention in the computer system 1 is characterized by the structure of the I/O board 4-0. FIG. 5 is a diagram showing an I/O port part of an I/O board, according to an embodiment of the present invention. In FIG. 5, those parts which are essentially the same as those corresponding parts in FIGS. 1 and 2 are designated by the same reference numerals. The computer system 1 embodying the present invention as shown in FIG. 5 employs a partition allocation method, according to an embodiment of the present invention.

The structures of each of the I/O boards 4-0 through 4-N are the same, and FIG. 5 shows the structure of the I/O board 4-0 as an example. The I/O port part 42 of the I/O board 4-0 has 8 I/O ports 42-0 through 42-7, for example. Conventionally, the I/O controllers 41A and 41 B to which the I/O ports 42-0 through 42-7 belong are fixedly determined. But according to the present invention, assignment information of I/O ports (I/O port to I/O controller assignment information or I/O port partition assignment information) that indicates an I/O controller, for example, I/O controller 41 A or 41 B, to which each of the I/O ports 42-0 through 42-7 belongs, can be arbitrarily set by software, that is, arbitrarily set by the CPU within the processor board 2-0, for example. In the case shown in FIG. 5, the assignment information is set so that the I/O ports 42-0, 42-1, 42-5 and 42-7 belong to the I/O controller 41 A and the I/O ports 42-2, 42-3, 42-4 and 42-6 belong to the I/O controller 41 B. Each of the I/O ports 42-0 through 42-7 is connectable to various kinds of I/O devices, such as magnetic disk drives. Because a partition may be determined in units of processor boards 2-0 and in units of I/O controllers 41 A or 41 B within an I/O board 2-0, it is possible to include the I/O controller 41A in the partition P3 and to include the I/O controller 41 B in the partition P4, for example.

According to an aspect of the present invention, if the assignment information of the I/O ports 42 cannot be changed directly from a processor board 2-0, a management processor board that manages configuration information, such as the assignment information, the partition ID (PID) and the configuration address, can be provided to set the assignment information of the I/O ports 42. In other words, it is possible to provide an exclusive processor board that makes a setting on whether a processor board 2-0 and an I/O controller 41 within an I/O board 4-0 are to form a partition, and to manage the configuration information described above and execute the software that sets the assignment information. Such an exclusive processor board may communicate indirectly with the other processor boards 2-0.

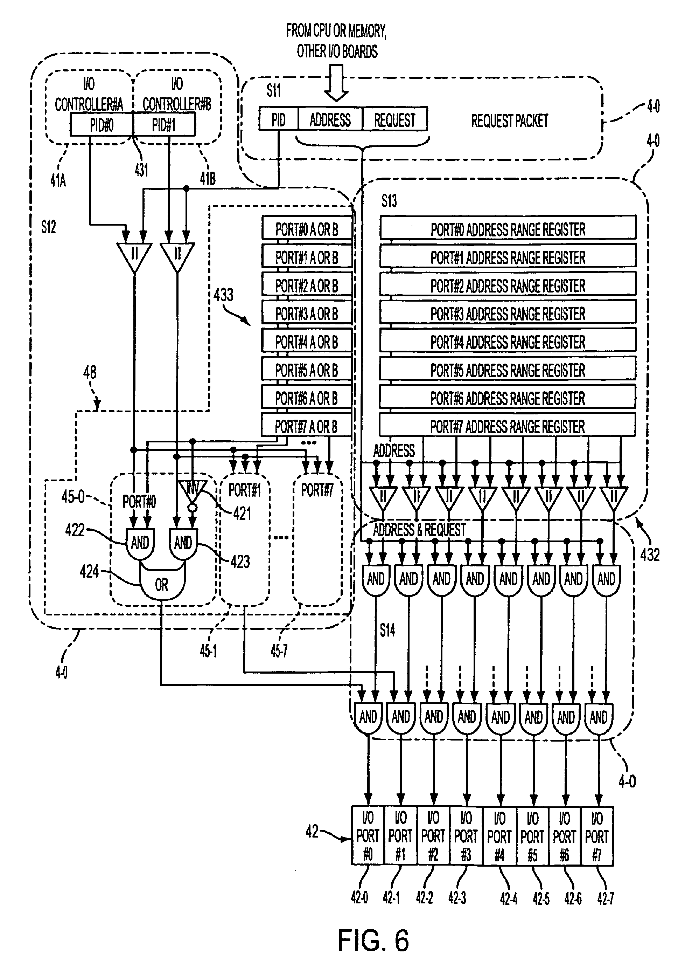

In the example computer system embodiment described herein, each of the I/O boards 4-0 through 4-N includes the I/O controllers 41 A and 41 B, the I/O port part 42 and the register part 43, as described above in conjunction with FIG. 1. The register part 43 comprises the device number register 431 that stores the device numbers of the I/O controllers, such as the I/O controllers 41A and 41 B, within the I/O board 4-0 to which this register part 43 belongs, the address range register 432 that stores the address range of the I/O port part 42 within the I/O board 4-0 to which this register part 43 belongs, and an I/O port assignment information register 433 (see FIG 6). The I/O port assignment information that indicates whether each of the I/O ports 42-0 through 42-7 belongs to an I/O controller, such as I/O controller 41 A or 41 B (i.e., to which partition, in units of an I/O controller within an I/O board, the I/O ports belong), is set in the I/O port assignment information register 433 by the software.

FIG. 6 is a diagram for explaining an access from the processor board towards the I/O device, according to an embodiment of the present invention. In FIG. 6, a circuit indicated by a triangular symbol denotes a comparator that outputs "1" when 2 inputs thereof match and outputs "0" when 2 inputs thereof do not match. A circuit indicated by "AND" denotes an AND gate, and a circuit indicated by "OR" denotes an OR gate. In addition, portions of the I/O board 4-0 related to steps S11 through S14 are surrounded by one-dot chain lines.

In FIG. 6, for example, in the case of the access from the processor board 2-0 towards the I/O device, a request packet is sent to the I/O board 4-0 (step S11). The request packet is made up of a partition ID (PID); an address (Address), such as a physical address of a request target, an address space (or address range) and an I/O address; and a request content (Request) including commands and data. In the I/O board 4-0, the PID of the request packet is compared with the device number #0 of the I/O controller 41A within the I/O board 4-0 that is stored in the device number register 431 of the register part 43 within the I/O board 4-0 for the I/O ports belonging to the I/O controller 41 A, and compared with the device number #1 of the I/O controller 41 B within the I/O board 4-0 that is stored in the device number register 431 of the register part 43 within the I/O board 4-0 for the I/O ports belonging to the I/O controller 41 B, based on the I/O port assignment information that is set in the I/O port assignment information register 433 of the register part 43 within the I/O board 4-0 (step S12). According to an aspect of the present invention, the I/O port assignment information register 433 can implemented, for example, as part of the register part 43 and/or as a new separate register. Further, although the embodiments described herein refer to a register in which I/O port assignment information can be set, the present invention is not limited to such a configuration and the I/O port information can be set in any software settable or computer readable media within an I/O board. According to an aspect of the present invention, the I/O port assignment information register 433 can be seen by a processor board 2-0 to be set/configured via software executing at the processor board 2-0. According to an aspect of the present invention, typically in the present invention, a PID written with or comprising a device number of an I/O controller to which an I/O port belongs, is configured at a time of (for example, prior to) booting the computer system 1 and/or according to dynamic reconfiguration methods provided in/used by the computer system 1. The I/O port assignment information set in the I/O port assignment information register 433 is used to identify, based upon the PID, the I/O port 42 allocated to I/O controller 41 within the I/O board 4-0. Circuits 45-0 through 45-7 shown in FIG. 6 are provided in correspondence with the I/O ports 42-0 through 42-7 to execute the step S12 described above. The circuits 45-0 through 45-7 can have the same structure; and, for example, each circuit 45 can comprise an inverter 421, AND gates 422 and 423, and an OR gate 424 to identify to which I/O controller and I/O port belongs. In addition, at the same time as the step S12, the address of the request packet is compared with the address ranges of each of the I/O ports 42-0 through 42-7 that are stored in the address range register 432 of the register part 43 (step S13). As step S14, the request packet reaches only the I/O port 42 that belongs to the I/O controller 41 having a matching device number as a result of the comparison made in the step S12 and that also has the matching address as a result of the comparison made in the step S13 (step S14), and the access is made to the desired I/O device via identified I/O port. According to an aspect of the present invention, as an example, a first partition allocation unit 48 comprises the I/O port assignment information register 433 and the circuit(s) 45. The partition allocation unit 48 can be implemented in software, programmable computing hardware, computing hardware/devices or any combinations thereof.

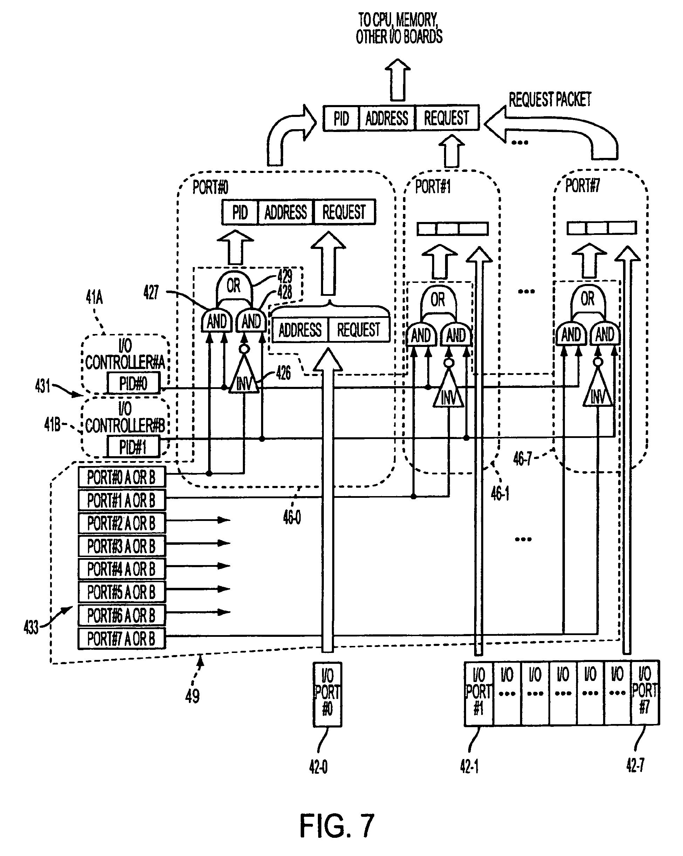

FIG. 7 is a diagram for explaining an access from the I/O device towards the processor board, according to an embodiment of the present invention. For example, in the case of an access from the I/O board 4-0 towards the processor board 2-0, the I/O port 42 sends to the processor board 2-0 via the address and data crossbar 3 a request packet having a PID written with the device number of the I/O controller 41 to which this I/O port 42 belongs, based on the request received from the I/O device and including the address (Address) and the request content (Request). For example, if one of the I/O ports 42-0, 42-1, 42-5 and 42-7 of the I/O board 4-0 receives the request from the I/O device, the request packet having a PID written with the device number #0 of the I/O controller 41 A (the device number #0 stored in the device number register 431 of the register part 43 within the I/O board 4-0) and information as to which I/O controller 41Athe I/O ports 42-0, 42-1, 42-5 and 42-7 belong, is sent, based on the I/O port assignment information that is set in the I/O port assignment information register 433 of the register part 43 within the I/O board 4-0. In addition, if one of the I/O ports 42-2, 42-3, 42-4 and 42-6 of the I/O board 4-0 receives the request from the I/O device, the request packet having a PID written with the device number #1 of the I/O controller 41 B of the I/O board 4-0 (the device number #1 stored in the device number register 431 of the register part 43 within the I/O board 4-0) and information as to which I/O controller 41 B the I/O ports 42-2, 42-3, 42-4 and 42-6 belong, is sent, based on the I/O port assignment information that is set in the I/O port assignment information register 433 of the register part 43 within the I/O board 4-0. Circuits 46-0 through 46-7 shown in FIG. 7 are provided in correspondence with the I/O ports 42-0 through 42-7 to send the request packet described above. The circuits 46-0 through 46-7 can have the same structure; and, for example, each circuit 46 can comprise an inverter 426, AND gates 427 and 428, and an OR gate 429 to identify to which I/O controller an I/O port belongs. According to an aspect of the present invention, as an example, a second partition allocation unit 49 comprises the I/O port assignment information register 433 and the circuit(s) 46. The partition allocation unit 49 can be implemented in software, programmable computing hardware, computing hardware/devices or any combinations thereof. Further, the first and second partition allocators 48 and 49 can be implemented as one or a plurality of components in software, programmable computing hardware, computing hardware/devices or any combinations thereof.

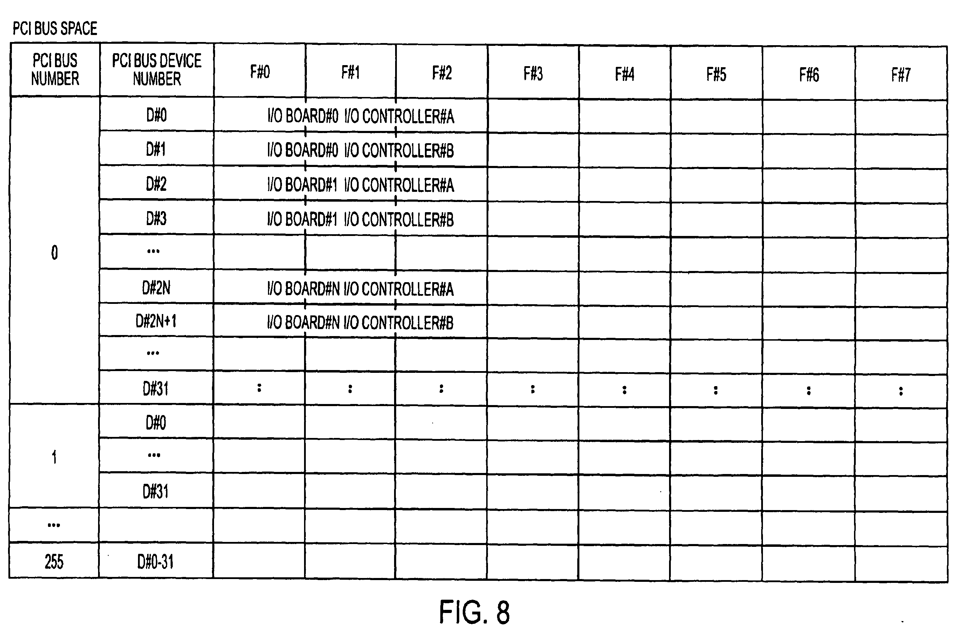

FIG. 8 is a diagram showing assignments of PCl function numbers F#0 through F#7 in one arbitrary PCI bus configuration space to I/O ports of I/O controllers, according to an embodiment of the present invention. In particular, FIGS. 8-10 are directed to an aspect of the present invention when an I/O board 4-0 comprising a plurality of I/O controllers 41 provides or is implemented as a Peripheral Component Interconnect (PCI) interface to various PCI devices. The present invention allows assigning PCI functions to any I/O ports of I/O controllers in an I/O board. As shown in FIG. 8, the PCI function numbers F#0 through F#7 of each of PCI bus device numbers D#0 through D#31 are assigned with respect to each of PCI bus numbers 0 through 255. For example, the I/O controller #A (41A) of the I/O board #0 (4-0) is assigned to the function numbers F#0 through F#7, with respect to the device number D#0 of the PCI bus number 0. In addition, the I/O controller #B (41 B) of the I/O board #0 (4-0) is assigned to the function numbers F#0 through F#7, with respect to the device number D#1 of the PCI bus number 0. Furthermore, the I/O controller #A (41A) of the I/O board #1 (4-1) is assigned to the function numbers F#0 through F#7, with respect to the device number D#2 of the PCI bus number 0. Such assignments of the function numbers F#0 through F#7 are made with respect to each PCI bus configuration space, that is, each partition of processor board(s) 2-0 and I/O controller(s) 41 within I/O board(s) 4-0.

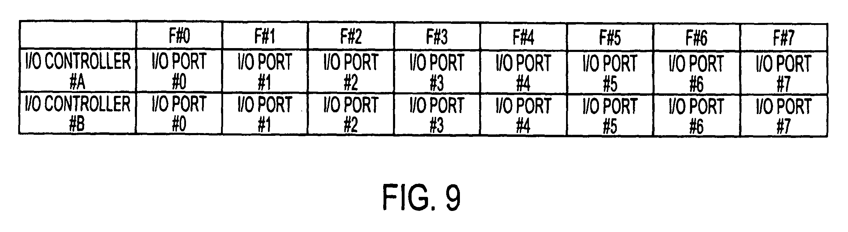

As an example, FIG. 9 is a diagram showing assignments of the I/O ports #0 through #7 (42-0 through 42-7), belonging to the 2 I/O controllers #A and #B (41 A and 41 B) within each of the I/O boards #0 through #N (4-0 through 4-N), to the PCI function numbers F#0 through F#7, according to an embodiment of the present invention. As shown in FIG. 9, the assignments to the function numbers F#0 through F#7 can be made so that the I/O ports 42-0 through 42-7 belong to the I/O controller 41A, and the assignments to the function numbers F#0 through F#7 can be made so that the I/O ports 42-0 through 42-7 belong to the I/O controller 41 B.

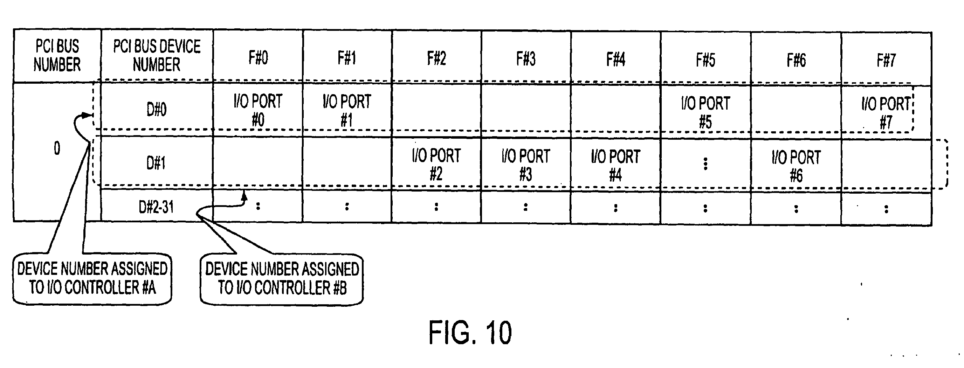

As another example, FIG. 10 is a diagram showing the assignments of the PCI function numbers F#0 through F#7 to different I/O ports 42 of I/O controllers 41 A, 41 B for a case where the I/O ports #0, #1, #5 and #7 (42-0, 42-1, 42-5 and 42-7) of the I/O board #0 (4-0) belong to the I/O controller #A (41 A), and the I/O ports #2, #3, #4 and #6 (42-2, 42-3, 42-4 and 42-6) of the same I/O board #0 (4-0) belong to the I/O controller #B (41 B), according to an embodiment of the present invention. In FIG 10, it is assumed for the sake of convenience that the I/O controllers 41A and 41 B of the I/O board 4-0 belong to the same partition. In a case where the I/O controllers 41 A and 41 B of the I/O board 4-0 belong to mutually different partitions, two information groups as surrounded by dotted lines in FIG. 10 would be assigned to the function numbers F#0 through F#7 in the corresponding PCI configuration spaces, that is, the corresponding partitions of processor board(s) 2-0 and I/O controller 41 A or 41 B within an I/O board 4-0. Accordingly, an embodiment of the present invention can support a multifunction PCI device with each PCI function assigned to any I/O ports 42 of I/O controllers 41 in an I/O board 4. As illustrated in FIGS. 8-10 examples, in case of eight (8) supported PCI functions for a PCI device and eight (8) supported I/O ports 42-0-7, a PCl function to I/O port assignment data structure can be generated (e.g., real-time and/or dynamic) in which three information of PCI bus no., PCI bus device no. and PCI function no. can identify any one of the 8 I/O ports 42-0-7 of I/O controllers 41-A, B, within an I/O board 4-0 to which a PCl function no. belongs.

Accordingly, in the I/O port assignment information register 433 of the register part 43 within each I/O port 42, it is sufficient to set an identifier (ID) of a partition assign unit within the I/O board (LSI) 4-0 in which each I/O port 42 exists, that is, to set I/O port assignment information that indicates an I/O controller 41 A or 41 B to which each I/O port 42 belongs. In other words, it is unnecessary to set the address (PCI bus number, device number and function number) of the I/O port in the PCl bus configuration space in the I/O port assignment information register 433 of the register part 43 within each I/O board 4-0 for each I/O port 42.

Therefore, according to the present invention, it is possible to arbitrarily set I/O port assignment information that indicates I/O controllers 41 (e.g., 41A or 41 B) to which I/O ports 42 (e.g., 42-0 through 42-7) belong, in each of the I/O boards 4-0 through 4-N. Since a partition can be determined in units of the processor boards 2-0 and I/O controllers 41 within an I/O board 4-0, it is possible to flexibly assign the I/O ports 42-0 through 42-7 of each of the I/O boards 4-0 through 4-N with respect to the I/O controllers 41 (e.g., 41A and 41 B) to suit needs. As a result, in unlimiting examples, the degree of freedom of partition allocation is improved, and/or the utilization efficiency of the resources is also improved. Moreover, the I/O port assignment information may be set by software, and not by a switching by hardware. For example, the present invention is suited for application to computer systems that allocate I/O controllers and I/O ports to a plurality of partitions.

## Claims

1. A partition allocation method for a computer system (1) in which a plurality of processor boards (2) and a plurality of input and output (I/O) boards (4) are coupled via an address and data crossbar (3), to allocate partitions in units of the processor boards (2) and in units of I/O controllers (41) within the I/O boards (4), the method **characterized by**:
providing in a software settable I/O port assignment register part (43) within a corresponding one of the I/O boards (4), having a device number register (431), an address range register (432) and an I/O port assignment information register (433), and
enabling upon receipt of a data packet from a processor board (2), a comparison of a partition ID of the data packet with stored device numbers of the I/O controllers (41) that are stored in said device number register (431) and at the same time, allowing a comparison of an address of the data packet with stored address ranges of each of the I/O ports (42) that are stored in said address range register (432),
wherein the data packet reaches an I/O port (42), only if the I/O controller (41), to which the I/O port belongs as indicated in the I/O port assignment information stored in said I/O port assignment information register (433), has the matching device number and the matching address according to the partition ID comparison and the address comparison;
thereby allowing partitions to be indicated in units of the processor boards (2) and in units of I/O controllers (41) within the I/O boards (4), to which the plurality of I/O ports (42) within said each of the I/O boards (4) belong, wherein each of the partitions is made up of an arbitrary number of processor boards (2) and an arbitrary number of I/O controllers (41).

2. The partition allocation method as claimed in claim 1, wherein the setting of the I/O port assignment information by software comprises setting an identifier (ID) of a partition assignment within each I/O board (4) in which each of the I/O ports (42) exists.

3. The partition allocation method as claimed in claim 1, wherein the setting of the I/O port assignment information by software comprises setting assignment information indicating the I/O controllers (41) within each I/O board (4) in which each of the I/O ports (42) exists.

4. The partition allocation method as claimed in any of claims 1 to 3, further comprising executing the by-software setting via an arbitrary one of a plurality of processors within an arbitrary one of the processor boards (2).

5. The partition allocation method of claim 4, wherein the arbitrary one of the processor boards (2) is a configuration management processor board.

6. The partition allocation method of claim 1, further comprising:
storing a device number of each of the I/O controllers (41) within said corresponding one of the I/O boards (2), and storing an address range of each of the I/O ports (41) within said corresponding one of the I/O boards (2);
configuring a data packet partition identifier (ID) comprising a device number of an I/O controller (41) to which an I/O port (42) belongs to enable, upon receipt of a data packet, comparing of the partition ID of the data packet with the stored device numbers of the I/O controllers (41), based on the by-software set I/O port assignment information, and comparing of an address of the data packet with the stored address ranges of each of the I/O ports (42), wherein the data packet reaches only a partition having the matching device number and the matching address according to the partition ID comparing and the address comparing.

7. The partition allocation method of claim 6, wherein the configuring of the data packet partition ID is performed at a time of booting the computer system (1) and/or according to dynamic reconfiguration methods of the computer system (1).

8. A computer system (1), comprising:
a plurality of processor boards (2) each including a plurality of processors;
a plurality of input and output (I/O) boards (4) each including a plurality of I/O controllers (41) and a plurality of I/O ports (42); and
an address and data crossbar (3) coupling the plurality of processor boards (2) and the plurality of I/O boards (4), **characterized by**
each of the I/O boards (4) including a software settable register part (43) comprising:
a device number register (431);
an address range register (432); and
an I/O port assignment information register (433),
wherein said corresponding one of the I/O boards (4) is arranged, upon receipt of a request packet instructing an access from an arbitrary one of the processor boards (2) towards a desired I/O device that is coupled to said corresponding one of the I/O boards (4), to compare a partition ID of the request packet with device numbers of the I/O controllers (41) that are stored in said device number register (431) and at the same time, is arranged to compare an address of the request packet with address ranges of each of the I/O ports (42) that are stored in said address range register (432),
wherein the request packet reaches an I/O port (42), only if the I/O controller (41), to which the I/O port belongs as indicated in the I/O port assignment information stored in said I/O port assignment information register (433), has the matching device number and the matching address as a result of the comparisons made;
thereby allowing partitions to be indicated in units of the processor boards (2) and in units of I/O controllers (41) within the I/O boards (4), to which the plurality of I/O ports (42) within said each of the I/O boards (4) belong, wherein each of the partitions is made up of an arbitrary number of processor boards (2) and an arbitrary number of I/O controllers (41).

9. The computer system (1) as claimed in claim 8, wherein I/O port assignment information indicating the I/O controllers (41) within the I/O board (4) to which each of the I/O ports (42) is assigned is set in the register part (43) as said information indicating partitions to which the plurality of I/O ports (42) within said each of the I/O boards (4) belong.

10. The computer system (1) as claimed in claim 8 or 9, wherein an arbitrary one of a plurality of processors within an arbitrary one of the processor boards (2) executes the software.

11. The computer system (1) according to claim 9, wherein said register part (43) includes the device number register (431) to store a device number of each of the I/O controllers (41) within said corresponding one of the I/O boards (4), the address range register (432) to store an address range of each of the I/O ports (42) within said corresponding one of the I/O boards (4), and the I/O port assignment information register (431) in which said information is set indicating the assigned I/O controllers (41) of the I/O ports (42) within said corresponding one of the I/O boards (4).

12. The computer system (1) as claimed in claim 11,
wherein the computer system (1) configures a partition ID written with a device number of an I/O controller (41) to which an I/O port (42) belongs at a time of booting the computer system (1) and/or according to dynamic reconfiguration methods of the computer system (1).

13. The computer system (1) as claimed in claim 11, wherein said corresponding one of the I/O boards (4), upon receipt via one I/O port (42) of a request instructing an access from an I/O device that is coupled to said corresponding one of the I/O boards (4) towards a desired processor board (2), sends to the desired processor board (2) via the address and data crossbar (3) a request packet having a partition identifier (ID) written with a device number of the I/O controller (41) to which said one I/O port (42) belongs.

14. The computer system (1) of claim 10, wherein the arbitrary one of the processor boards (2) executing the software setting is a configuration management processor board.

15. The computer system as claimed in claim 8, further comprising:
a plurality of processing means (2); and
a plurality of input and output (I/O) means (4) in communication with the plurality of processing means (2),
wherein each I/O means (4) comprises the plurality of I/O controllers (41) and the partition allocator (48).

16. Input and output (I/O) apparatus (4) for a computer system having a plurality of processor boards (2) and an address and data crossbar (3) for coupling the I/O apparatus (4) to the processor boards (2), comprising:
a plurality of I/O controllers (41) and a plurality of I/O ports (42) in communication with the I/O controllers (41); **characterized by**
a software settable partition allocator (48) comprising:
a device number register (431);
an address range register (432); and
an I/O port assignment information register (433);
a first circuit, upon receipt of a data packet from a processor board (2), arranged to compare a partition ID of the data packet with device numbers of the I/O controllers (41) that are stored in said device number register (431; and
a second circuit arranged to compare, at the same time as the first circuit, an address of the data packet with address ranges of each of the I/O ports (42) that are stored in said address range register (432),
wherein the data packet reaches an I/O port (42), only if the I/O controller (41), to which the I/O port belongs as indicated in the I/O port assignment information stored in said I/O port assignment information register (433), has the matching device number and the matching address according to the partition ID comparing of said first circuit and the address comparing of said second circuit;
thereby allowing partitions to be indicated in units of the processor boards (2) and in units of I/O controllers (41) within the I/O boards (4), to which the plurality of I/O ports (42) within said each of the I/O boards (4) belong, wherein each of the partitions is made up of an arbitrary number of processor boards (2) and an arbitrary number of I/O controllers (41).

17. The apparatus of claim 16, wherein the I/O controllers (41) and the I/O ports (42) are according to Peripheral Component Interconnect (PCI) to communicably interface with a PCI device.

18. The apparatus as claimed in claim 16, further comprising:
a plurality of processor boards (2); and
a plurality of input and output (I/O) boards (4) in communication with the plurality of processor boards (2),
wherein each I/O board (4) comprises the plurality of I/O controllers (41) and the partition allocator (48).

19. The apparatus of claim 18,
wherein the I/O controllers (41) and the I/O ports (42) within the I/O board (4) are according to Peripheral Component Interconnect (PCI) to communicably interface with a multifunction PCI device comprising a plurality of PCI functions, and
wherein a processor board (2) generates a PCI function-to-I/O port assignment data structure that identifies any one of the I/O ports of the I/O controllers within an I/O board to which a PCl function of a PCI device belongs.

## Patentansprüche

1. Partitionszuordnungsverfahren für ein Computersystem (1), in dem eine Vielzahl von Prozessorplatten (2) und eine Vielzahl von Eingangs- und Ausgangs-(I/O)-Platten (4) über eine Adressen- und Datenkreuzschiene (3) gekoppelt sind, um Partitionen in Einheiten der Prozessorplatten (2) und in Einheiten von I/O-Controllern (41) innerhalb der I/O-Platten (4) zuzuordnen, welches Verfahren **gekennzeichnet ist durch**:
Vorsehen, in einem **durch** Software festlegbaren I/O-Port-Zuordnungsregisterteil (43) innerhalb einer entsprechenden der I/O-Platten (4), eines Vorrichtungszahlenregister (431), eines Adressenbereichsregisters (432) und eines I/O-Port-Zuordnungsinformationsregisters (433) und
Ermöglichen, bei Empfang eines Datenpaketes von einer Prozessorplatte (2), eines Vergleichs eines Partitions-ID des Datenpaketes mit gespeicherten Vorrichtungszahlen der I/O-Controller (41), die in dem Vorrichtungszahlenregister (431) gespeichert sind, und gleichzeitiges Zulassen eines Vergleichs einer Adresse des Datenpaketes mit gespeicherten Adressenbereichen von jedem der I/O-Ports (42), die in dem Adressenbereichsregister (432) gespeichert sind,
bei dem das Datenpaket einen I/O-Port (42) nur erreicht, falls der I/O-Controller (41), zu dem der I/O-Port gehört, wie in den I/O-Port-Zuordnungsinformationen angegeben, die in dem I/O-Port-Zuordnungsinformationsregister (433) gespeichert sind, die übereinstimmende Vorrichtungszahl und die übereinstimmende Adresse gemäß dem Partitions-ID-Vergleich und dem Adressenvergleich hat;
wodurch Partitionen in Einheiten der Prozessorplatten (2) und in Einheiten von I/O-Controllern (41) innerhalb der I/O-Platten (4), zu denen die Vielzahl von I/O-Ports (42) innerhalb einer jeden der I/O-Platten (4) gehört, angegeben werden können, wobei jede der Partitionen eine beliebige Zahl der Prozessorplatten (2) und eine beliebige Zahl der I/O-Controller (41) umfasst.

2. Partitionszuordnungsverfahren nach Anspruch 1, bei dem die Festlegung der I/O-Port-Zuordnungsinformationen durch Software das Festlegen eines Identifikators (ID) einer Partitionszuordnung innerhalb einer jeden I/O-Platte (4) umfasst, in der jeder der I/O-Ports (42) existiert.

3. Partitionszuordnungsverfahren nach Anspruch 1, bei dem die Festlegung der I/O-Port-Zuordnungsinformationen durch Software das Festlegen von Zuordnungsinformationen umfasst, die die I/O-Controller (41) innerhalb einer jeden I/O-Platte (4) angeben, in der jeder der I/O-Ports (42) existiert.

4. Partitionszuordnungsverfahren nach einem der Ansprüche 1 bis 3, ferner mit dem Ausführen der Festlegung durch Software über einen beliebigen von einer Vielzahl von Prozessoren innerhalb einer beliebigen der Prozessorplatten (2).

5. Partitionszuordnungsverfahren nach Anspruch 4, bei dem die beliebige der Prozessorplatten (2) eine Konfigurationsverwaltungsprozessorplatte ist.

6. Partitionszuordnungsverfahren nach Anspruch 1, ferner mit:
Speichern einer Vorrichtungszahl von jedem der I/O-Controller (41) innerhalb der entsprechenden der I/O-Platten (2) und Speichern eines Adressenbereiches eines jeden der I/O-Ports (41) innerhalb der entsprechenden der I/O-Platten (2);
Konfigurieren eines Datenpaketpartitionsidentifikators (ID), der eine Vorrichtungszahl eines I/O-Controllers (41) umfasst, zu dem ein I/O-Port (42) gehört, um bei Empfang eines Datenpaketes den Partitions-ID des Datenpaketes mit den gespeicherten Vorrichtungszahlen der I/O-Controller (41) vergleichen zu können, auf der Basis der durch Software festgelegten I/O-Port-Zuordnungsinformationen, und eine Adresse des Datenpaketes mit den gespeicherten Adressenbereichen eines jeden der I/O-Ports (42) vergleichen zu können, bei dem das Datenpaket nur eine Partition erreicht, die die übereinstimmende Vorrichtungszahl und die übereinstimmende Adresse gemäß dem Partitions-ID-Vergleich und dem Adressenvergleich hat.

7. Partitionszuordnungsverfahren nach Anspruch 6, bei dem das Konfigurieren des Datenpaketpartitions-ID zur Zeit des Bootens des Computersystems (1) und/oder gemäß dynamischen Rekonfigurationsverfahren des Computersystems (1) ausgeführt wird.

8. Computersystem (1) mit:
einer Vielzahl von Prozessorplatten (2), die jeweils eine Vielzahl von Prozessoren enthalten;
einer Vielzahl von Eingangs- und Ausgangs-(I/O)-Platten (4), die jeweils eine Vielzahl von I/O-Controllern (41) und eine Vielzahl von I/O-Ports (42) enthalten; und
einer Adressen- und Datenkreuzschiene (3), die die Vielzahl von Prozessorplatten (2) und die Vielzahl von I/O-Platten (4) koppelt, **dadurch gekennzeichnet, dass**
jede der I/O-Platten (4) einen durch Software festlegbaren Registerteil (43) enthält, der umfasst:
ein Vorrichtungszahlenregister (431);
ein Adressenbereichsregister (432); und
ein I/O-Port-Zuordnungsinformationsregister (433),
wobei die entsprechende der I/O-Platten (4) angeordnet ist, um bei Empfang eines Aufforderungspaketes, das einen Zugriff von einer beliebigen der Prozessorplatten (2) auf eine gewünschte I/O-Vorrichtung anweist, die mit der entsprechenden der I/O-Platten (4) gekoppelt ist, ein Partitions-ID des Aufforderungspaketes mit Vorrichtungszahlen der I/O-Controller (41) zu vergleichen, die in dem Vorrichtungszahlenregister (431) gespeichert sind, und gleichzeitig angeordnet ist, um eine Adresse des Aufforderungspaketes mit Adressenbereichen eines jeden der I/O-Ports (42) zu vergleichen, die in dem Adressenbereichsregister (432) gespeichert sind,
bei dem das Aufforderungspaket einen I/O-Port (42) nur erreicht, falls der I/O-Controller (41), zur dem der I/O-Port gehört, wie in den I/O-Port-Zuordnungsinformationen angegeben, die in dem I/O-Port-Zuordnungsinformationsregister (433) gespeichert sind, die übereinstimmende Vorrichtungszahl und die übereinstimmende Adresse als Resultat der vorgenommenen Vergleiche hat;
wodurch Partitionen in Einheiten der Prozessorplatten (2) und in Einheiten von I/O-Controllern (41) innerhalb der I/O-Platten (4), zu denen die Vielzahl von I/O-Ports (42) innerhalb einer jeden der I/O-Platten (4) gehört, angegeben werden können, wobei jede der Partitionen eine beliebige Zahl der Prozessorplatten (2) und eine beliebige Zahl der I/O-Controller (41) umfasst.

9. Computersystem (1) nach Anspruch 8, bei dem I/O-Port-Zuordnungsinformationen, welche die I/O-Controller (41) innerhalb der I/O-Platte (4) angeben, denen ein jeder der I/O-Ports (42) zugeordnet ist, in dem Registerteil (43) als die Informationen festgelegt sind, die Partitionen angeben, zu denen die Vielzahl von I/O-Ports (42) innerhalb der jeweiligen der I/O-Platten (4) gehört.

10. Computersystem (1) nach Anspruch 8 oder 9, bei dem ein beliebiger von einer Vielzahl von Prozessoren innerhalb einer beliebigen der Prozessorplatten (2) die Software ausführt.

11. Computersystem (1) nach Anspruch 9, bei dem der Registerteil (43) das Vorrichtungszahlenregister (431) enthält, um eine Vorrichtungszahl von jedem der I/O-kontroller (41) innerhalb der entsprechenden der I/O-Platten (4) zu speichern, das Adressenbereichsregister (432), um einen Adressenbereich von jedem der I/O-Ports (42) innerhalb der entsprechenden der I/O-Platten (4) zu speichern, und das I/O-Port-Zuordnungsinformationsregister (431), in dem die Informationen festgelegt sind, die die zugeordneten I/O-Controller (41) der I/O-Ports (42) innerhalb der entsprechenden der I/O-Platten (4) angeben.

12. Computersystem (1) nach Anspruch 11,
bei dem das Computersystem (1) einen Partitions-ID, der mit einer Vorrichtungszahl eines I/O-Controllers (41) beschrieben ist, zu dem ein I/O-Port (42) gehört, zur Zeit des Bootens des Computersystems (1) und/oder gemäß dynamischen Rekonfigurationsverfahren des Computersystems (1) konfiguriert.

13. Computersystem (1) nach Anspruch 11, bei dem die entsprechende der I/O-Platten (4), bei Empfang einer Aufforderung, über einen I/O-Port (42), die einen Zugriff von einer I/O-Vorrichtung, die mit der entsprechenden der I/O-Platten (4) gekoppelt ist, auf eine gewünschte Prozessorplatte (2) anweist, an die gewünschte Prozessorplatte (2) über die Adressen- und Datenkreuzschiene (3) ein Aufforderungspaket sendet, das einen Partitionsidentifikator (ID) hat, der mit einer Vorrichtungszahl des I/O-Controllers (41) beschrieben ist, zu dem der genannte I/O-Port (42) gehört.

14. Computersystem (1) nach Anspruch 10, bei dem die beliebige der Prozessorplatten (2), die die Softwarefestlegung ausführt, eine Konfigurationsverwaltungsprozessorplatte ist.

15. Computersystem nach Anspruch 8, ferner mit:
einer Vielzahl von Verarbeitungsmitteln (2); und
einer Vielzahl von Eingangs- und Ausgangs-(I/O)-Mitteln (4), die mit der Vielzahl von Verarbeitungsmitteln (2) in Verbindung stehen,
bei dem jedes I/O-Mittel (4) die Vielzahl von I/O-Controllern (41) und den Partitionszuordner (48) umfasst.

16. Eingangs- und Ausgangs-(I/O)-Gerät (4) für ein Computersystem, das eine Vielzahl von Prozessorplatten (2) und eine Adressen- und Datenkreuzschiene (3) zum Koppeln des I/O-Gerätes (4) mit den Prozessorplatten (2) hat, umfassend:
eine Vielzahl von I/O-Controllern (41) und eine Vielzahl von I/O-Ports (42), die mit den I/O-Controllern (41) in Verbindung stehen; **gekennzeichnet durch**
einen **durch** Software festlegbaren Partitionszuordner (48), der umfasst:
ein Vorrichtungszahlenregister (431);
ein Adressenbereichsregister (432); und
ein I/O-Port-Zuordnungsinformationsregister (433);
eine erste Schaltung, die angeordnet ist, um bei Empfang eines Datenpaketes von einer Prozessorplatte (2) einen Partitions-ID des Datenpaketes mit Vorrichtungszahlen der I/O-Controller (41) zu vergleichen, die in dem Vorrichtungszahlenregister (431) gespeichert sind; und
eine zweite Schaltung, die angeordnet ist, um zu derselben Zeit wie die erste Schaltung eine Adresse des Datenpaketes mit Adressenbereichen von jedem der I/O-Ports (42) zu vergleichen, die in dem Adressenbereichsregister (432) gespeichert sind,
bei dem das Datenpaket einen I/O-Port (42) nur erreicht, falls der I/O-Controller (41), zu dem der I/O-Port gehört, wie in den I/O-Port-Zuordnungsinformationen angegeben, die in dem I/O-Port-Zuordnungsinformationsregister (433) gespeichert sind, die übereinstimmende Vorrichtungszahl und die übereinstimmende Adresse gemäß dem Partitions-ID-Vergleich der ersten Schaltung und dem Adressenvergleich der zweiten Schaltung hat;
wodurch Partitionen in Einheiten der Prozessorplatten (2) und in Einheiten von I/O-Controllern (41) innerhalb der I/O-Platten (4), zu denen die Vielzahl von I/O-Ports (42) innerhalb jeder der I/O-Platten (4) gehört, angegeben werden können, wobei jede der Partitionen eine beliebige Zahl der Prozessorplatten (2) und eine beliebige Zahl der I/O-Controller (41) umfasst.

17. Gerät nach Anspruch 16, bei dem die I/O-Controller (41) und die I/O-Ports (42) dem Peripheral Component Interconnect (PCI) entsprechen, um mit einer PCI-Vorrichtung kommunikationsfähig verbunden zu werden.

18. Gerät nach Anspruch 16, ferner umfassend:
eine Vielzahl von Prozessorplatten (2); und
eine Vielzahl von Eingangs- und Ausgangs-(I/O)-Platten (4), die mit der Vielzahl von Prozessorplatten (2) in Verbindung stehen,
bei dem jede I/O-Platte (4) die Vielzahl von I/O-Controllern (41) und den Partitionszuordner (48) umfasst.

19. Gerät nach Anspruch 18,
bei dem die I/O-Controller (41) und die I/O-Ports (42) innerhalb der I/O-Platte (4) dem Peripheral Component Interconnect (PCI) entsprechen, um mit einer Multifunktions-PCI-Vorrichtung, die eine Vielzahl von PCI-Funktionen umfasst, kommunikationsfähig verbunden zu werden, und
bei dem eine Prozessorplatte (2) eine PCI-Funktion-zu-I/O-Port-Zuordnungsdatenstruktur erzeugt, die einen der I/O-Ports der I/O-Controller innerhalb einer I/O-Platte identifiziert, zu dem eine PCI-Funktion einer PCI-Vorrichtung gehört.

## Revendications

1. Procédé d'attribution de partitions pour un sytème informatique (1) dans lequel une pluralité de cartes (2) de processeurs et une pluralité de cartes (4) d'entrée et sortie (E/S) sont couplés via une barre transversale (3) d'adresses et de données, pour attribuer des partitions dans des unités des cartes (2) de processeurs et dans des unités de régisseur (41) d'E/S à l'intérieur des cartes (4) d'E/S, le procédé étant **caractérisé :**
**en ce qu'**il est prévu une section (43) de registres d'affectation de port d'E/S paramétrable par processeur dans l'une, correspondante, des cartes (4) d'E/S, ayant un registre (431) de numéro de dispositif, un registre (432) de plage d'adresse et un registre (433) d'information d'affectation de port d'E/S ; et
par l'activation, à réception d'un paquet de données provenant d'une carte (2) de processeurs, d'une comparaison d'un identificateur (ID) de partition du paquet de données avec des numéros mémorisés de dispositif des régisseurs (41) d'E/S qui sont mémorisés dans ledit registre (431) de numéro de dispositif et en même temps, par le fait de permettre une comparaison de l'adresse du paquet de données avec des plages mémorisées d'adresse de chacun des ports (42) d'E/S qui sont mémorisées dans ledit registre (432) de plage d'adresse,
dans lequel le paquet de données atteint un port (42) d'E/S, seulement si le régisseur (41) d'E/S auquel appartient le port d'E/S tel que désigné dans l'information d'affectation de port d'E/S mémorisée dans ledit registre (433) d'information d'affectation de port d'E/S, possède le numéro de dispositif correspondant et l'adresse correspondante d'après la comparaison d'ID de Partition et la comparaison d'adresse :
en permettant ainsi que des partitions soient désignées dans des unités des canes (2) de processeurs et dans des unités des régisseurs (41) d'E/S à l'intérieur des cartes (4) d'E/S. auxquelles appartiennent les ports d'E/S de la pluralité de ports (42) d'E/S à l'intérieur de chacune desdites cartes (4) d'E/S, chacune des partitions étant constituée d'un nombre arbitraire de cartes (2) de processeurs et d'un nombre arbitraire de régisseurs (41) d'E/S.

2. Procédé d'attribution de partitions selon la revendication 1, dans lequel le paramétrage de l'information d'affectation de port d'E/S par logiciel comprend le paramétrage d'un identificateur (ID) d'une affectation de partition à l'intérieur de chaque carte (4) d'E/S dans laquelle existe chacun des ports (42) d'E/S.

3. Procédé d'attribution de partitions selon la revendication 1, dans lequel le paramétrage de l'information d'affectation de port d'E/S par logicien comprend le paramétrage d'une information d'affectation indiquant les régisseurs (41) d'E/S l'intérieur de chaque carte (4) d'E/S dans laquelle existe chacun des ports (42) d'E/S.

4. Procédé d'attribution de partitions selon l'une quelconque des revendications 1 à 3, comprenant en outre l'exécution du paramétrage par logiciel via l'un, arbitraire, d'une pluralité de processeurs à l'intérieur de l'une, arbitraire, des cartes (2) de processeurs.

5. Procédé d'attribution de partitions selon la revendication 4, dans lequel la carte arbitraire des cartes (2) de processeurs est une carte de processeurs de gestion de configuration.

6. Procédé d'attribution de partitions selon la revendication 1, comprenant en outre :
la mémorisation d'un numéro de dispositif de chacun des régisseurs (41) d'E/S à l'intérieur de ladite carte correspondante des cartes (2) d'E/S, et la mémorisation d'une plage d'adresse de chacun des ports (41) d'E/S à l'intérieur de ladite carte correspondante des cartes (2) d'E/S ;
la configuration d'un identificateur (ID) de partition de paquet de données comprenant un numéro de dispositif d'un régisseur (41) d'E/S auquel appartient un port (42) d'E/S pour autoriser, à réception d'un paquet de données, une comparaison de l'ID de partition du paquet de données avec les numéros mémorisés de dispositif des régisseurs (41) d'E/S, en se basant sur l'information d'affectation de port d'E/S paramétrée par logiciel, et une comparaison de l'adresse du paquet de données avec les plages mémorisées d'adresse de chacun des ports (42) d'E/S, le paquet de données atteignant seulement une partition ayant le numéro de dispositif correspondant et l'adresse correspondante d'après la comparaison d'ID de partition et la comparaison d'adresse.

7. Procédé d'attribution de partitions selon la revendication 6, dans lequel la configuration de l'ID de partition de paquet de données se fait au moment du lancement du système informatique (1) et/ou d'après des procédés de reconfiguration dynamique du système informatique (1).

8. Système informatique (1), comprenant :
une pluralité de cartes (2) de processeurs chacune incluant une pluralité de processeurs ;
une pluralité de cartes (4) d'entrée et sortie (E/S) chacune incluant une pluralité de régisseurs (41) d'E/S et une pluralité de ports (42) d'E/S ; et
une barre transversale (3) d'adresses et de données couplant la pluralité de cartes (2) de processeurs et la pluralité de cartes (4) d'E/S,
**caractérisé :**
**en ce que** chacune des cartes (4) d'E/S comprend une section (43) de registres paramétrable par logiciel comprenant :
un registre (431) de numéro de dispositif ;
un registre (432) de plage d'adresse ; et
un registre (433) d'information d'affectation de port d'E/S,
dans lequel ladite carte correspondante des cartes (4) d'E/S est agencée pour, à réception d'un paquet de demande ordonnant un accès provenant de l'une, arbitraire, des cartes (2) de processeurs en direction d'un dispositif d'E/S voulu qui est couplé à ladite carte correspondante des cartes (4) d'E/S, comparer un identificateur (ID) de partition du paquet de demande avec des numéros de dispositif des régisseurs (41) d'E/S qui sont mémorisés dans ledit registre (431) de numéro de dispositif et en même temps, est agencée pour comparer l'adresse du paquet de demande avec des plages d'adresse de chacun des ports (42) d'E/S qui sont mémorisées dans ledit registre (432) de plage d'adresse,
dans lequel le paquet de demande atteint un port (42) d'E/S. seulement si le régisseur 141 d'E/S auquel appartient le port d'E/S tel que désigné dans l'information d'affectation de port d'E/S mémorisée dans ledit registre (433) d'information d'affectation de port d'E/S, possède le numéro de dispositif correspondant et l'adresse correspondante comme résultat des comparaisons effectuées ;
en permettant ainsi que des partitions soient désignées dans des unités des cartes (2) de processeurs et dans des unités des régisseurs (41) d'E/S à l'intérieur des cartes (4) d'E/S, auxquelles appartiennent les ports d'E/S de la pluralité de ports (42) d'E/S à l'intérieur de chacune desdites cartes (4) d'E/S, chacune des partitions étant constituée d'un nombre arbitraire de cartes (2) de processeurs et d'un nombre arbitraire de régisseurs (41) d'E/S.

9. Système informatique (1) selon la revendication 8, dans lequel l'information d'affectation de port d'E/S indiquant les régisseurs (41) d'E/S à l'intérieur de la carte (4) d'E/S auxquels est affecté chacun des ports (42) d'E/S est paramétrée dans la section (43) de registres en tant que ladite information indiquant des partitions auxquelles appartient la pluralité de ports (42) d'E/S à l'intérieur de chacune desdites cartes (4) d'E/S.

10. Système informatique (1) selon la revendication 8 ou 9, dans lequel un, arbitraire, d'une pluralité de processeurs à l'intérieur d'une, arbitraire, des cartes (2) de processeurs exécute le logiciel.

11. Système informatique (1) selon la revendication 9, dans lequel ladite section (43) de registres comprend le registre (431) de numéro de dispositif pour mémoriser un numéro de dispositif de chacun des régisseurs (41) d'E/S à l'intérieur de ladite carte correspondante des cartes (4) d'E/S, le registre (432) de plages d'adresse pour mémoriser une plate d'adresse de chacun des ports (42) d'E/S l'intérieur de ladite carte correspondante des cartes (4) d'E/S, et le registre (431) d'information d'affectation de port d'E/S dans lequel est paramétrée ladite information indiquant les régisseurs (41) d'E/S affectés des ports (42) d'E/S à l'intérieur de ladite carte correspondante des cartes (4) d'E/S.

12. Système informatique (1) selon la revendication 11, dans lequel le système informatique (1) configure un ID de partition écrit avec un numéro de dispositif d'un régisseur (41) d'E/S auquel appartient un port (42) d'E/S au moment du lancement du système informatique (1) et/ou d'après des procédés de reconfiguration dynamique du système informatique (1).

13. Système informatique (1) selon la revendication 11, dans lequel ladite carte correspondante des cartes (4) d'E/S. à réception via un port (42) d'E/S d'une demande ordonnant un accès provenant d'un dispositif d'E/S qui est couplé à ladite carte correspondante des cartes (4) d'E/S en direction d'une carte voulue (2) de processeurs, envoie à la carte voulue (2) de processeurs via la barre transversale (3) d'adresses et de données un paquet de demande ayant un identificateur (ID) de partition écrit avec le numéro de dispositif du régisseur (41) d'E/S auquel appartient ledit un port (42) d'E/S.

14. Système informatique (1) selon la revendication 10, dans lequel la carte arbitraire des cartes (2) de processeurs exécutant le paramétrage de logiciels est une carte de processeurs de gestion de configuration.

15. Système informatique selon la revendication 8, comprenant en outre :
une pluralité de moyens (2) de traitement ; et
une pluralité de moyens (4) d'entrée et sortie (E/S) en communication avec la pluralité de moyens (2) de traitement,
dans lequel chaque moyen (4) d'E/S comprend la pluralité de régisseurs (41) d'E/S et l'attributeur (48) de partitions.

16. Équipement (4) d'entrée et sortie (E/S) pour un système informatique ayant une pluralité de cartes (2) de processeurs et une barre transversale (3) d'adresses et de données destinée à coupler l'équipement (4) d'E/S aux cartes (2) de processeurs, comprenant :
une pluralité de régisseurs (41) d'E/S et une pluralité de ports (42) d'E/S en communication avec les régisseurs (41) d'E/S ;
**caractérisé :**
**par** un attributeur (48) de partition paramétrable par logiciel comprenant :
un registre (431) de numéro de dispositif ;
un registre (432) de plage d'adresse ; et
un registre (433) d'information d'affectation de port d'E/S,
par un premier circuit agencé pour, à réception d'un paquet de données provenant d'une carte (2) de processeurs, comparer un identificateur (ID) de partition du paquet de données avec des numéros de dispositif des régisseurs (41) d'E/S qui sont mémorisés dans ledit registre (431) de numéro de dispositif ; et
par un second circuit agencé pour, en même temps que le premier circuit, comparer l'adresse du paquet de données avec des plages d'adresse de chacun des ports (42) d'E/S qui sont mémorisées dans ledit registre (432) de plage d'adresse,
dans lequel le paquet de données atteint un port (42) d'E/S, seulement si le régisseur (41) d'E/S auquel appartient le port d'E/S tel que désigné dans l'information d'affectation de port d'E/S mémorisée dans ledit registre (433) d'information d'affectation de port d'E/S, possède le numéro de dispositif correspondant et l'adresse correspondante d'après la comparaison d'ID de partition dudit premier circuit et la comparaison d'adresse dudit second circuit ;
en permettant ainsi que des partitions soient désignées dans unité des cartes (2) de processeurs et dans des unités des régisseurs (41) d'E/S à l'intérieur des cartes (4) d'E/S, auxquelles appartiennent les ports de la pluralité de ports (42) d'E/S à l'intérieur de chacune desdites cartes (4) d'E/S, chacune des partitions étant constituée d'un nombre arbitraire de cartes (2) de processeurs et d'un nombre arbitraire de régisseurs (41) d'E/S.

17. Équipement selon la revendication 16, dans lequel les régisseurs (41) d'E/S et les ports (42) d'E/S sont interconnectés selon l'interconnexion de composants périphériques (PCI pour "Peripheral Component Interconnect") pour faire interface de façon communicante avec un dispositif de PCI.

18. Équipement selon la revendication 16, comprenant en outre :
une pluralité de cartes (2) de processeurs ; et
une pluralité de cartes (4) d'entrée et sortie (E/S) en communication avec la pluralité de cartes (2) de processeurs,
dans lequel chaque carte (4) d'E/S comprend la pluralité de régisseurs (41) d'E/S et l'attributeur (48) de partitions.

19. Équipement selon la revendication 18,
dans lequel les régisseurs (41) d'E/S et les ports (42) d'E/S à l'intérieur des cartes (4) d'E/S sont interconnectés selon l'interconnexion de composants périphériques (PCI) pour faire interface de façon communicante avec un dispositif de PCI multifonction comprenant une pluralité de fonctions de PCI, et
dans lequel une carte (2) de processeurs engendre une fonction de PCI par rapport à une structure de données d'affectation de port d'E/S qui identifie l'un quelconque des ports d'E/S des régisseurs d'E/S à l'intérieur d'une carte d'E/S à laquelle appartient une fonction de PCI d'un dispositif de PCI.
